# FASCICULE DE BREVET EUROPEEN

(11) **EP 2 259 684 B1**
(45) Date de publication et mention de la délivrance du brevet: **16.04.2014**
(21) Numéro de dépôt: 09712211.3
(22) Date de dépôt: 18.02.2009
(51) Int. Cl.: A01N 53/14, A01N 25/04, A01P 7/04

(54) **SUSPENSION D'INSECTICIDE OU DE PESTICIDE LIQUIDE OU CIREUX**
SUSPENSION EINES FLÜSSIGEN ODER WACHSARTIGEN PESTICIDES
SUSPENSION OF A LIQIUD OR WAXY INSECTICIDE OR PESTICIDE

(30) Priorité: 18.02.2008 BE 200800093
(43) Date de publication de la demande: 15.12.2010
(73) Titulaire: Agriphar, 4102 Seraing (Ougrée) (BE)
(72) Inventeur: PIROTTE, Alan, 6660 Houffalize (BE)
(74) Mandataire: Brantsandpatents bvba
(86) Numéro de dépôt international: PCT/EP2009/051897
(87) Numéro de publication internationale: WO 2009/103724

(56) Documents cités:
- EP-A- 0 029 626
- EP-A- 0 391 851
- WO-A-95/26631
- WO-A-97/37538
- WO-A-2005/053399

## Description

La présente invention se rapporte à une composition liquide comprenant un composé insecticide ou pesticide.

De telles compositions liquides sont généralement connues comme étant des compositions liquides concentrées à diluer telles qu'un concentré émulsionnable, une suspension concentrée, un concentré soluble ou encore des suspensions de capsules.

Les concentrés émulsionnables sont des solutions organiques d'un composé insecticide à diluer dans une phase aqueuse pour former une émulsion. Ils présentent l'avantage de permettre une mise en suspension facile, une bonne tenue en suspension, une bonne pénétration du produit dans le végétal ou l'insecte cible, une bonne efficacité. Ils n'émettent pas de poussière et sont aisés à diluer. Toutefois, les concentrés émulsionnables comprennent généralement des solvants inflammables et/ou aromatiques, ce qui les rend plus toxiques et difficiles à entreposer. En outre, leur sensibilité au froid est relativement élevée.

Les suspensions concentrées comprennent un composé pesticide ou insecticide solide en suspension dans une phase liquide, de préférence dans l'eau. Elles sont faciles à manipuler lors de la dilution, présentent une bonne efficacité biologique qui est liée à une petite taille des particules et sont ininflammables, en ce qui concerne les suspensions aqueuses. Les suspensions concentrées sont moins phytotoxiques que les concentrés émulsionnables et ne génèrent pas de poussière.

Malheureusement, les suspensions concentrées ne peuvent être réalisées pour tous les types de pesticides et nécessitent que le pesticide ait une faible solubilité dans l'eau, une grande stabilité dans l'eau et un point de fusion, de manière générale, supérieur à 60°c.

Les concentrés solubles sont quant à eux faciles à manipuler et aisément compatibles mais nécessitent que le composé pesticide soit soluble dans une phase aqueuse.

Les suspensions de capsules permettent une libération retardée de la matière active et dès lors permettent d'obtenir une efficacité plus longue. Les suspensions de capsules présentent les avantages de la formulation liquide en ne générant pas de poussières.

En outre, les suspensions de capsules permettent des dosages ainsi qu'une cadence des traitements réduits tout en diminuant le risque de toxicité ainsi que la volatilité. Malheureusement, ces suspensions de capsules sont largement plus onéreuses.

A côté des liquides concentrés à diluer, on connaît en outre des compositions solides (concentrées) à diluer, telles que des poudres mouillables, des granulés dispersibles dans l'eau ou encore des compositions solides (granulés et poudre) prêtes à l'emploi (pour poudrage) dans lesquelles le composé pesticide ou insecticide est sous forme solide ou adsorbé sur un solide.

La poudre mouillable présente de nombreux avantages comme la résistance au gel, un stockage aisé, une haute tolérance par les plantes, un risque d'inflammabilité réduit ainsi que le fait que le produit est concentré. Malheureusement une telle composition de poudre mouillable génère une quantité importante de poussière et nécessite une manipulation pour un dosage pondéral.

Les granulés dispersibles dans l'eau présentent les mêmes caractéristiques que la poudre mouillable mais ne génèrent pratiquement plus de poussière lors de la manipulation. Cependant, ils sont bien plus chers que les poudres mouillables.

Les solides prêts à l'emploi présentent un avantage d'autonomie d'épandage et ne nécessitent pas d'eau. Toutefois, ces produits sont peu concentrés et le transport est dès lors particulièrement coûteux.

La présente invention concerne les pesticides ou insecticides liquides ou cireux à la température ambiante.

Il est à l'heure actuelle connu de réaliser des solutions à base de ces pesticides ou insecticides liquides ou cireux (dilution du pesticide/insecticide liquide ou cireux dans un solvant généralement aromatique).

Malheureusement, de telles solutions, une fois diluées et appliqués sur la zone à traiter, peuvent être rapidement absorbées par les supports surtout si le support présente une forte porosité. Par exemple, comparé à la feuille d'un arbre, l'eau pénétrera plus vite dans un mur en béton ou des planches en bois .

Dès lors, l'application du composé pesticide ou insecticide doit être renouvelée plus vite, ce qui aggrave le facteur impact sur l'environnement et augmente le coût pour obtenir un traitement efficace.

Il est connu de préparer des compositions solides de substances liquides ou cireuses en les adsorbant sur un silicate hydraté ou sur une silice amorphe.

Malheureusement, lorsque ces compositions solides sont diluées dans l'eau pour obtenir une suspension concentrée de composé insecticide ou pesticide liquide ou cireux, elles présentent une stabilité très faible. En effet, il a été montré que lorsque les silicates hydratés ou la silice amorphe étaient mis en contact avec l'eau, la matière active entrait en compétition avec l'eau et se désorbait progressivement du support solide pour former des gouttelettes huileuses qui sédimentent et/ou des cristaux de pesticide d'une taille supérieure à 150 µm.

Dès lors, une fois la suspension concentrée diluée dans l'eau, ce qui est nécessaire pour l'application sur la zone à traiter, son efficacité observée est réduite puisque soit les composés insecticides ou pesticides sont sous forme de gouttelettes liquides qui peuvent pénétrer dans le support, soit les composés insecticides ou pesticides sont sous forme de cristaux d'une taille supérieure à 150 µm et viennent boucher les buses de pulvérisation.

On connaît également du document EP 0029626, une composition de pyréthroide liquide ou cireux à la température ambiante émulsifié avec un agent émulsifiant avant de former une suspension du composé insecticide/pesticide émulsifié avec un véhicule, de l'eau et un agent de dispersion. Cette suspension ainsi formée doit être broyée pour obtenir une taille de particule et un agent structurant doit être ajouté.

Selon le document EP 0029626, le véhicule ou l'agent structurant peut être par exemple de l'argile du groupe de la montmorillonite, de la kaolinite, de l'attapulgite, de la bentonite ou du talc, de la terre de diatomée ou du carbonate de calcium.

La suspension selon EP 0029626 comprend donc une première quantité de pyréthroide émulsionné adsorbé sur un véhicule et une deuxième quantité de pyréthroide émulsionné dans la phase aqueuse.

La première quantité de pyréthroide se désorbe progressivement car les véhicules mentionnés sont hydrophiles et présentent donc une affinité supérieure pour la phase aqueuse que pour le pyréthroide émulsionné (hydrophobe).

Dans de tels cas, lorsque la suspension de véhicule contenant également de fines gouttelettes émulsifiées de pyréthroide est appliquée sur une zone à traiter, les particules solides en suspension (ne contenant pas ou plus de matière active) restent sur les surfaces de la zone à traiter, mais la matière active émulsionnée pénètre facilement dans les surfaces poreuses diminuant dès lors l'efficacité de la suspension car la substance active a pénétré et n'entre plus en contact avec le nuisible contre lequel le traitement est appliqué.

Il est un objet selon l'invention de procurer une suspension concentrée d'un composé pesticide liquide ou cireux à la température ambiante, stable pendant un minimum de 2 ans à température ambiante dans un climat tempéré et qui présente une efficacité similaire à la poudre par exemple à la poudre mouillable de par la présence de particules déposées sur la zone à traiter qui restent plus longtemps que si l'on avait appliqué un liquide sans la présence de poussière.

A cette fin, il est prévu suivant l'invention, une composition liquide telle que mentionnée au début dans laquelle ledit composé insecticide ou pesticide est adsorbé sur un silicate calciné, ledit composé insecticide ou pesticide ainsi adsorbé étant en suspension dans une phase aqueuse dans ladite composition liquide. Dès lors, il est possible suivant l'invention de former une suspension concentrée qui présente un effet insecticide réel tout en étant stable au cours du temps et moins polluante qu'une solution dans un solvant généralement aromatique.

Il était dès lors souhaitable de réaliser une suspension concentrée de composé insecticide ou pesticide selon l'invention dans de l'eau pour diminuer fortement le facteur polluant tout en augmentant l'efficacité jusqu'à l'efficacité d'une poudre.

L'invention concerne donc des suspensions concentrées de composé insecticide ou pesticide dans lesquelles des particules solides, sur lesquelles est adsorbé le composé insecticide ou pesticide, sont très majoritairement en suspension dans une phase liquide. Une petite partie toutefois de composé insecticide ou pesticide peut éventuellement être émulsionnée dans la phase liquide. De telles suspensions concentrées sont parfois appelées suspo-émulsions et ne sont en aucun cas à apparenter à des émulsions de matière active dans lesquelles des particules solides sont ajoutées et dans lesquelles aucune ou très peu de matière active est adsorbée.

L'utilisation d'un silicate calciné a révélé de manière surprenante que la suspension concentrée obtenue était stable car ledit silicate calciné présente une affinité élevée pour les composés insecticides ou pesticides. Particulièrement, ledit composé insecticide ou pesticide liquide ou cireux est un composé pyréthrinoïde ou un pyrèthre naturel.

En effet, ledit silicate calciné contient une quantité très réduite de molécules d'eau, ce qui augmente ses capacités d'adsorption. En outre, la calcination modifie la structure de la charge minérale (en plaquettes pour les aluminosilicates) en une structure explosée augmentant largement sa surface spécifique.

En outre, et contrairement à ce que l'on aurait imaginé, ledit silicate calciné contenant une quantité réduite en eau présente un caractère hydrophile atténué et dès lors, son affinité, de manière surprenante, vis-à-vis du pesticide ou insecticide liquide ou cireux insoluble dans l'eau et donc hydrophobe, est augmentée rendant la composition selon l'invention incroyablement stable (malgré le fait que le silicate calciné contient une quantité d'eau très réduite par rapport au silicate non calciné).

Dès lors, dans la composition selon l'invention, le silicate calciné peut adsorber plus de composé pesticide ou insecticide, liquide ou cireux à la température ambiante et la composition reste stable au cours du temps.

Avantageusement, ledit composé pyréthrinoïde est choisi dans le groupe de la perméthrine, de la cyperméthrine, de la zéta-cyperméthrine, du fenvalérate, de la cyfluthrine, de la cyhalothrine et autres analogues liquides ou cireux, ainsi que leurs mélanges, leurs dérivés, et leurs isomères.

Les composés insecticides ou pesticides avantageusement formulés dans la composition selon l'invention comptent parmi ceux ayant une efficacité élevée et un spectre d'action large.

Dans une forme de réalisation avantageuse, ledit silicate calciné présente un d50 compris dans une plage allant de 0,1 à 50, de préférence de 1 à 35, plus préférentiellement de 1 à 15 et de la manière la plus préférentielle d'environ 5 µm.

Il est en effet avantageux que les particules de silicate calciné présentent un diamètre moyen relativement faible afin que les particules de composé pyréthrinoïde adsorbées sur le silicate calciné puissent être réparties de manière homogène dans la suspension (mise en suspension facilitée) et soient également répandues sur la zone à traiter de manière optimale (fine granulométrie).

En particulier, le silicate calciné selon l'invention est choisi dans le groupe constitué des aluminosilicates calcinés, des silicates de magnésium calcinés, des aluminosilicates de magnésium calcinés, leurs dérivés et leurs mélanges.

Dans une forme de réalisation avantageuse, ladite composition selon l'invention comprend également un ou plusieurs tensioactifs choisis dans le groupe constitué des tensioactifs ioniques et des tensioactifs non ioniques, tels que les alcoxylates d'alkylphénol (Berol 02), les alcoxylates d'alcool (par exemple le Tensiofix DB08, le Tensiofix 96DB10, Tergitol XD), des esters de phosphate (par exemple Tensiofix XA265), des ethers de phosphate (Rhodafac MB), des alkylpoly-glucosides (Glucopon 650), des esters de sucrose (Sisterna SP), des méthoxypolyéthylène glycols (Carbowax MPEG), des sulfates d'alcool gras (Empicol LX), des sulfates d'alcools gras éthérés (Empicol ESB), des éthoxylates de tristyrylphénol (soprophor FL), du polycondensat de sulphonate de naphtalène formaldéhyde (Morwett D425), des sels de lignosuflonate, des polycarboxylates (Coatex DV177) et analogues.

De cette façon, la dispersion des particules est améliorée. En outre, certains de ces agents tensioactifs sont des émulgateurs qui auront pour rôle d'émulsionner le composé insecticide ou pesticide qui pourrait se désorber lors de la manipulation ultérieure de la composition selon l'invention pour éviter sa sédimentation et la maintenir en suspension dans la phase aqueuse.

Dans une forme de réalisation préférentielle, la composition selon l'invention comprend en outre un ou plusieurs antioxydants choisis parmi le 2,6-di-tert-butyl-4-méthylphénol (BHT), le 2,6-bis-(1,1-diméthyléthyl)-4-méthylphénol, le butylhydroxyanisole (BHA), le 2,6-di-tert-but-1-hydroxy-4-méthylbenzène, le 6-éthoxy-6-éthoxy-1,2-dihydro-2,2,4-triméthylquinoléine, le 2-tert-butylhydroquinone, les tocophérols, les gallates, leur dérivés et analogues ainsi que leurs mélanges, ce qui permet d'améliorer la conservation de la composition selon l'invention.

En outre, la composition comprend un agent anti-mousse.

Dans une forme avantageuse, le composé pyréthrinoïde ou le pyrèthre sont d'abord mis en solution dans un solvant tel qu'un solvant à base de composés aromatiques, un kérosène désaromatisé, une huile minérale, une huile végétale, un biodiesel ou un agrocarburant choisi parmi le biodiesel de colza, de tournesol, d'algues, de maïs, de coco, de palme, de coton et analogues, de préférence dans un rapport (en poids), solvant/composé insecticide liquide ou cireux à la température ambiante compris entre 100/1 et 1/20.. Le solvant sert à rendre la matière active (le composé pyréthrinoïde ou le pyrèthre) plus fluide pour faciliter son imprégnation ou son adsorption sur le silicate calciné.

En particulier, la composition selon l'invention comprend de 0,25 à 400 g/l de composé pyréthroïde ou de pyrèthre, de préférence de 50 à 250 g/l et plus préférentiellement entre 95 et 110 g/l.

D'autres formes de réalisation de la composition selon l'invention sont mentionnées dans les revendications annexées.

L'invention se rapporte également à un procédé de fabrication d'une suspension concentrée de composé insecticide ou pesticide, liquide ou cireux à température ambiante comprenant les étapes de mise en suspension de particules de silicate et dudit composé insecticide ou pesticide dans une phase aqueuse.

On connaît un tel procédé également du document EP 0029626 qui permet d'obtenir une suspension d'un véhicule dans une phase aqueuse contenant également un composé insecticide ou pesticide émulsionné à l'aide d'un émulsifiant.

Ce procédé présente l'inconvénient de fournir une suspension peu stable et peu efficace à longue durée, comme on l'a mentionné précédemment.

L'invention a pour but de résoudre ce problème en procurant un procédé tel que mentionné ci-dessus, caractérisé en ce que ledit silicate est calciné et en ce qu'il comprend en outre préalablement à ladite mise en suspension, une formation d'une phase liquide homogène dudit composé insecticide ou pesticide et une pulvérisation de cette phase liquide homogène sur lesdites particules de silicates calcinés.

Dès lors, puisque le procédé selon l'invention comprend une formation d'une phase liquide homogène qui sera ultérieurement pulvérisée sur le silicate calciné, l'adsorption du composé insecticide est optimale sur le silicate calciné et la suspension obtenue est alors plus stable au cours du temps.

Dans un mode de réalisation, dans le procédé selon l'invention, la formation de ladite phase liquide homogène comprend une dilution dudit composé insecticide ou pesticide, liquide ou cireux à la température ambiante dans un solvant choisi dans le groupe constitué d'un solvant à base de composés aromatiques, un kérosène désaromatisé, une huile minérale, une huile végétale, un biodiesel ou un agrocarburant choisi parmi le biodiesel de colza, de tournesol, d'algues, de maïs, de coco, de palme, de coton et analogues

Il a été trouvé (voir exemples comparatifs) que dans certains cas, comme par exemple dans le cas de pyréthroïdes, ceux-ci comprennent parfois plusieurs isomères dont certains cristallisent au cours du temps lorsqu'une adsorption est réalisée sur une charge minérale. La dilution du composé insecticide dans un solvant et dans rapport solvant / pesticide approprié permet d'éviter une cristallisation ultérieure,

Avantageusement, le rapport solvant/pyréthroide doit être supérieur ou égal à 0,5 et inférieur ou égal à 2.

Dans une autre forme de réalisation, la formation de ladite phase liquide homogène comprend en outre une addition d'un ou plusieurs additifs choisi parmi un ou plusieurs tensioactifs, un ou plusieurs antioxydants, , un stabilisateur et analogues.

Avantageusement, le procédé selon l'invention comprend en outre, postérieurement à la mise en suspension, une dispersion desdites particules de silicate calciné sur lesquelles est adsorbé ledit composé insecticide ou pesticide. Cette dispersion peut se réaliser par une agitation énergique ou à l'aide de disperseur industriel de type rotor/stator.

Il est souhaitable de réaliser une dispersion plutôt qu'un broyage desdites particules de silicate calciné. Le broyage (réduction de la taille des particules de silicate calciné) provoque une désorption partielle du composé pesticide ou insectice. Ce composé pesticide ou insecticide sera alors émulsionné sous forme de fines gouttelettes liquides qui pourront pénétrer à l'intérieur du support poreux de la zone à traiter, ce qui va nuire à l'efficacité. Il

De préférence, dans le procédé selon l'invention, ladite mise en suspension est accompagnée d'une addition d'un ou plusieurs additifs choisi parmi un ou plusieurs tensioactifs, un ou plusieurs antioxydants, un agent anti-mousse, un agent bactéricide, fongicide, un conservateur, un stabilisateur et analogues.

D'autres modes de réalisation du procédé selon l'invention sont mentionnés dans les revendications annexées.

D'autres caractéristiques, détails et avantages de l'invention ressortiront de la description donnée ci-après, à titre non limitatif et en faisant référence aux exemples.

### Exemple 1

Une solution de cyperméthrine a été réalisée en utilisant 107,5 g de cyperméthrine (grade technique à 93 % disponible auprès de Agriphar S.A.) que l'on a mélangé à 16 g de Tensiofix 96DB10 (disponible auprès de Omnichem S.A.) et à 0,15 g de 2,6-di-tert-butyl-4-méthylphénol (BHT) (disponible auprès de la S.A. Univar Benelux), ainsi qu'à 43.2 g de biodiesel Radia® 7961 (disponible auprès de Atofina-Oleochemicals, Petrofina, Royaume-Uni).

On a obtenu un pré-mélange homogène de cyperméthrine.

On a ensuite pulvérisé ce pré-mélange homogène sur 332.5 g de silicate calciné Optipozz® (disponible auprès de la société Burgess Pigment Company, Georgie) préalablement placé dans un mélangeur afin d'obtenir un pré-mélange de cyperméthrine solide.

On a ensuite constitué une phase liquide comprenant les éléments suivants (Tableau 1) et dans laquelle le pré-mélange a été transféré.

**Tableau 1**

| Ingrédients | Grammes |
|---|---|
| eau | 615 |
| antimousse DC 1510 (Dow Corning) | 7,5 |
| Promex Na2OS | 0,5 |
| Tensiofix DB08 | 15 |
| Tensiofix XA265 | 4 |
| Tensiofix SC | 10 |
| Coatex DV177 | 5 |

Les Tensiofix sont des tensioactifs disponibles auprès de la société d'Omnichem (Belgique), tandis que Coatex DV177 est un tensioactif disponible auprès de la société Coatex Additives Designers (France).

Le Promex Na2OS est un biocide permettant de prévenir le développement de microorganismes dans la composition.

On a mélangé les éléments ensemble et on a ajouté un mélange permettant de modifier la viscosité de la composition selon l'invention comprenant 50 g de propylène glycol disponible auprès de la société Brenntag NV (Belgique) et de 2 g de gomme de Xanthane (Rhodopol 23, disponible auprès de la société Rhodia Operations (France)) tout en maintenant le mélange.

Le volume de composition était de 1 litre.

On a réalisé une observation visuelle et aucune désorption de la cyperméthrine n'a été détectée. Après une observation au microscope, nous avons observé qu'une partie de la cyperméthrine se désorbait et était effectivement émulsionnée en gouttelettes avec le biodiesel et l'aide du Tensiofix 96DB10.

La stabilité de la formulation a ensuite été vérifiée au cours du temps au moyen d'une méthode de vieillissement accélérée selon une méthode officielle pour l'agrochimie (CIPAC MT36, 14 jours à 54°C). Après analyse de l'échantillon, comme on peut le voir sur le Tableau 2, les paramètres physico-chimiques n'ont pas subi de modification majeure et la formule peut être considérée comme stable.

**Tableau 2**

| Analyse | | | |
|---|---|---|---|
| | Echantillon initial | Echantillon 14 jours à 54°C | Echantillon : 5 cycles à -10°C/+54°C |
| ASPECT | | | |
| Etat physique | liquide | liquide | liquide |
| opacité | opaque | opaque | opaque |
| couleur | blanc crème | blanc crème | blanc crème |
| homogénéité | homogène | 3 % de surnageant pas de béton | 3 % de surnageant pas de béton |

| MATIERE ACTIVE | | | |
|---|---|---|---|
| % en poids/poids g/l | 9,00 | 8,98 | - |
| | 108,8 | 108,5 | - |
| Diamètre moyen des particules (à 50 %) (microns) | 3,4 | 3,4 | 3,2 |
| Densité à 20°C (sur produit désaéré) (kg/l) | 1,209 | - | - |
| Viscosité à 20°C (cPs) (Brookfield DVII+ -sp. 2-20 t/m) (sur produit désaéré) | 800 | 1080 | 900 |
| Tamisage sous eau | | | |
| Refus (%) à 75 microns | non mesurable | non mesurable | non mesurable |
| pH tel quel | 6,2 | 6,2 | 6,4 |
| Indice de suspension (CIPAC D - 22°C - 0,25%) | 95,9 | 96,5 | - |

### Exemple 2

On a semé de l'avoine de couvert sur une parcelle de terre. Un mois plus tard, on a constaté une forte infestation de pucerons.

On a ensuite traité des parcelles de 30 m² (3 m x 10 m) en quadruplicats dans des conditions climatiques de vent faible, une humidité relative de 85 %, une couverture nuageuse de 1/4, les végétaux étaient humides, à raison de 400 litres/hectare avec différentes compositions de cyperméthrine à 100 g/l et une solution témoin ne contenant pas de cyperméthrine.

La première composition C1 est la composition témoin.

La deuxième composition C2 de cyperméthrine était une composition de poudre mouillable obtenue avec 10 % en poids de cyperméthrine et contenant donc 100 g de cyperméthrine par kg de poudre formulée. La poudre mouillable a été obtenue en adsorbant de la cyperméthrine sur de la silice (SiO₂) puis en diluant ce pré-mélange à l'aide de silicate hydraté et de tensioactif.

La troisième composition C3 est une suspension concentrée selon l'invention contenant 100 g/l de cyperméthrine.

Les résultats obtenus, le troisième jour après le traitement, sont illustrés au Tableau 3, qui montre le nombre de pucerons encore présents par 50 plants d'avoine.

**Tableau 3**

| Traitement | A | B | C | D | Moyenne |
|---|---|---|---|---|---|
| C1 | 197 | 154 | 193 | 236 | 195,00 |
| C2 | 26 | 22 | 24 | 29 | 25,25 |
| C3 | 4 | 8 | 15 | 21 | 12,00 |

Au Tableau 4, on peut voir le nombre de pucerons présents 9 jours après le traitement sur 25 plants.

**Tableau 4**

| Traitement | A | B | C | D | Moyenne |
|---|---|---|---|---|---|
| C1 | 262 | 211 | 230 | 120 | 205,75 |
| C2 | 27 | 15 | 15 | 26 | 20,75 |
| C3 | 8 | 4 | 3 | 11 | 6,50 |

Comme on peut le voir aisément de ces résultats, la composition selon l'invention présente une meilleure efficacité par rapport à la composition de poudre mouillable probablement de par sa plus grande proportion de matière active restée adsorbée sur le support solide et ses avantages d'application.

### Exemple 3

Une solution de cyperméthrine a été réalisée en utilisant 107,5 g de cyperméthrine (grade technique à 93 % disponible auprès de Agriphar S.A.) que l'on a mélangé à 40 g de Tensiofix 96DB10 (disponible auprès de Omnichem S.A.) et à 0,15 g de 2,6-di-tert-butyl-4-méthylphénol (BHT) (disponible auprès de la S.A. Univar Benelux), ainsi qu'à 150 g de biodiesel Radia® 7961 (disponible auprès de Atofina-Oleochemicals, Petrofina, Royaume-Uni).

On a obtenu un pré-mélange homogène de cyperméthrine.

On a ensuite pulvérisé ce pré-mélange homogène de sur 500 g de silicate calciné Optipozz® (disponible auprès de la société Burgens Pigment Company, Georgie) préalablement placé dans un mélangeur afin d'obtenir un pré-mélange de cyperméthrine..

On a ensuite constitué une phase liquide comprenant les éléments suivants (Tableau 5) et dans laquelle le pré-mélange a été transféré.

**Tableau 5**

| Ingrédients | Grammes |
|---|---|
| eau | 445.9 |
| antimousse DC 1510 (Dow Corning) | 5 |
| Promex Na2OS | 0,5 |
| Tensiofix DB08 | 15 |
| Tensiofix XA265 | 5 |
| Tensiofix SC | 10 |
| Coatex DV177 | 15 |

On a mélangé les éléments ensemble et on a ajouté un mélange permettant de modifier la viscosité de la composition selon l'invention comprenant 2.25 g de propylène glycol disponible auprès de la société Brenntag NV (Belgique) et de 0.75 g de gomme de Xanthane (Rhodopol 23, disponible auprès de la société Rhodia Opérations (France) tout en maintenant le mélange.

Le volume de composition était de 1 litre.

On a réalisé une observation visuelle et aucune désorption de la cyperméthrine n'a été détectée. Après une observation au microscope, nous avons observé qu'une partie de la cyperméthrine se désorbait et était effectivement émulsionnée en gouttelettes avec le biodiesel et l'aide du Tensiofix 96DB10.

Grace au silicate calciné, on peut donc adsorber plus de matière active liquide qu'avec un kaolin ou un talc standard (voir exemples comparatifs 2 et 3). Des essais complémentaires ont montré qu'il est possible de maintenir une formulation stable avec des concentrations de 500g/l de silicate calciné, ce qui représente une quantité de prémélange solide allant de 757 g (500 g de silicate calciné + 107 g de cyperméthrine + 150 de biodiesel) jusqu'à 928 g (500 g de silicate calciné + 428 g de matière active diluée dans du biodiesel), nous permettant ainsi d'obtenir une suspension concentrée allant jusqu'à 200 g/l de cypermethrine et environ la même quantité de biodiesel car il a été observé que selon l'invention, il était avantageux d'avoir un rapport solvant/insectide compris entre 0.5 et 2, pour éviter toute cristallisation quand le pesticide liquide ou cireux comporte au moins 1 isomère cristallin à température amabiante, comme dans l'exemple 3

La stabilité de la formulation a ensuite été vérifiée au cours du temps au moyen d'une méthode de vieillissement accélérée selon une méthode officielle pour l'agrochimie (CIPAC MT36, 14 jours à 54°C). ainsi qu'au moyen d'un stockage de 6 mois à température à une température comprise entre 15 et 25°c. Après analyse de l'échantillon, comme on peut le voir sur le tableau 6, les paramètres physico-chimiques n'ont pas subi de modification majeure et la formule peut être considérée comme stable.

**Tableau 6**

| Analyse | | | |
|---|---|---|---|
| | Echantillon initial | Echantillon 14 jours à 54°C | Echantillon 6 mois à température ambiante |
| ASPECT | | | Liquide |
| Etat physique | liquide | liquide | Opaque |
| opacité | opaque | opaque | Blanc crème |
| couleur | blanc crème | blanc crème | homogène |
| homogénéité | homogène | homogène | |
| MATIERE ACTIVE | | | 7.84 |
| % en poids/poids g/l | 7.85 | 7.79 | 101.5 |
| | 101.6 | 100.8 | |
| Diamètre moyen des particules (à 50 %) (microns) | 3,4 | 3.6 | 3.4 |
| Densité à 20°C (sur produit désaéré) (kg/l) | 1.294 | - | - |
| Viscosité à 20°C (cPs) (Brookfield DVII+ -sp. 2-20 t/m) (sur produit désaéré) | 820 | 940 | 850 |
| Tamisage sous eau Refus (%) à 75 microns | non mesurable | non mesurable | Non mesurable |
| pH tel quel | 6,2 | 6,2 | 6.2 |

### Exemple comparatif 1

On a adsorbé 107g de cyperméthrine (grade technique à 93% disponible auprès de Agriphar S.A.) sur 300 g d'une charge minérale non calcinée (kaolin Opal G, Goonvean). Le mélange solide ainsi obtenu a ensuite été dilué dans 610 g d'eau mélangée à 30 g d'agent dispersant, 10g antimousse, 0,5g d'agent biocide. La viscosité de ce mélange a été ajustée à l'aide de 2 g de rhodopol 23 dispersé dans 50 g de propylène glycol. Cette suspension concentrée a été conservée en laboratoire, à température ambiante pendant 6 mois. Après 6 mois, la suspension obtenue a été évaluée en termes de stabilité. Des cristaux d'un ou de plusieurs isomères apparaissaient rendant ainsi la composition impropre à la vente (la longueur des cristaux atteignait environ 2_mm) car l'utilisation de cette composition serait impossible puisque les cristaux formés provoquent une obstruction des orifices de pulvérisation de tout dispositif de pulvérisation requis pour son utilisation.

### Exemple comparatif 2

On a déterminé la capacité d'adsorption de différentes charges minérales à l'aide d'une phase liquide constituée d'un ester méthylique d'huile de colza hydrophobe (Radia^{®} 7961-Oléon). Les résultats sont présentés ci-dessous au Tableau 7.

**Tableau 7**

| Charge minérale | Quantité en grammes de phase liquide hydrophobe adsorbée pour un poids final de prémélange de 100 g | Quantité en poids de charge minérale pour 100 g de prémélange |
|---|---|---|
| Kaolin Opal G (Goonvean) | 28,6 g | 71,4 |
| Silicate calciné Optipozz | 46,3 g | 53,7 |
| Tale 2s (Talc de Luzenac) | 23,5 g | 76,5 |
| Argirec B22 (AGS) | 24,9 g | 75,1 |

Comme on peut le voir clairement, seul le silicate calciné nous permet d'adsorber des quantités plus élevée de matière liquide hydrophobe.

### Exemple comparatif 3

On a produit une forme de réalisation d'une suspension de cyperméthrine selon l'enseignement du brevet EP 0029626 de la manière suivante.

84,9 g de cyperméthrine ont été mélangés à 43,9 g de Triton X-100. 507,2g d'eau ont ensuite été ajoutés sous agitation de manière à former une émulsion.

Sous agitation, 4,4 g de Tensiofix SC et 14,9 g de Pluronic PE1400 sont ajoutés à l'émulsion. Ensuite, 0,45 g d'antimousse DC1510 sont introduits et l'agitation est maintenue pendant 10 min.

175,4 g de Kaolin Opal G sont introduits sous agitation, cette agitation étant maintenue 15 minutes.

0,45 g d'antimousse DC1510 sont à nouveau ajoutés sous agitation.

Afin de réduire la taille des grains de Kaolin et la taille des gouttelettes de cypermethrine, la composition liquide ainsi formée est soumise à un broyage humide à l'aide d'un broyeur à billes de verre.

Durant ce procédé de broyage, la température ne dépasse pas 35°c et à la fin de ce broyage, les particules montrent une taille moyenne inférieure à 3µm.

Cette composition broyée est maintenant mélangée à 168.4 g d'une solution préparée à partir de 2,2 g de formaldéhyde 40%, de 98,2g d'eau, de 65,8 g d'éthylène glycol et de 2,2 g de Kelzan.

Ce qui nous a fourni une composition extrêmement visqueuse et non manipulable. Nous avons alors préparé à nouveau une composition selon l'enseignement du brevet EP 0029626 mais sans Kelzan pour obtenir un produit manipulable.

Une observation au microscope nous a permis de constater qu'une faible quantité de cyperméthrine était réellement adsorbée, elle était émulsionnée dans la phase liquide.

La stabilité de la formulation a ensuite été observée après 6 mois de repos à température ambiante. Après analyse de l'échantillon, Des cristaux d'un ou de plusieurs isomères apparaissaient rendant ainsi la composition impropre à la vente (la longueur des cristaux atteignait environ 2 mm) car l'utilisation de cette composition serait impossible puisque les cristaux formés provoquent une obstruction des orifices de pulvérisation de tout dispositif de pulvérisation requis pour son utilisation.. En outre, puisque la cyperméthrine était émulsionnée majoritairement et très peu adsorbée, son efficacité ne peut qu'être de courte durée car la majorité de la substance active n'est pas adsorbée sur une matière solide et pénètre rapidement dans les surfaces poreuses des zones à traiter. La matière solide qui reste dans le temps sur ces surfaces poreuses ne contient pas ou très peu de matière active, ce qui réduit l'efficacité du produit à longue durée.

## Revendications

1. Composition liquide pesticide comprenant un composé insecticide ou pesticide liquide ou cireux à température ambiante et un silicate en suspension dans une phase aqueuse, **caractérisée en ce que** ledit composé insecticide ou pesticide est adsorbé sur ledit silicate calciné.

2. Composition selon la revendication 1, dans laquelle ledit composé insecticide ou pesticide, liquide ou cireux, est un composé pyréthrinoïde ou un pyrèthre naturel.

3. Composition selon la revendication 2, dans laquelle ledit composé pyréthrinoïde est choisi dans le groupe de la perméthrine, de la cyperméthrine, de la zéta-cyperméthrine, du fenvalérate, de la cyfluthrine, de la cyhalothrine, ainsi que leurs mélanges.

4. Composition selon l'une quelconque des revendications 1 à 3, dans laquelle ledit silicate calciné présente un d50 compris dans une plage allant de 0.1 à 50.

5. Composition selon l'une quelconque des revendications précédentes, dans laquelle ledit silicate calciné est choisi dans le groupe constitué des aluminosilicates calcinés, des silicates de magnésium calcinés, des aluminosilicates de magnésium calcinés et leurs mélanges.

6. Composition selon l'une quelconque des revendications précédentes, comprenant en outre un ou plusieurs tensioactifs choisis dans le groupe constitué des tensioactifs ioniques et des tensioactifs non ioniques, tels que les alcoxylates d'alkylphénol, les alcoxylates d'alcool, des esters de phosphate, des ethers de phosphate, des alkylpoly-glucosides, des esters de sucrose, des méthoxypolyéthylène glycols, des sulfates d'alcool gras, des sulfates d'alcools gras éthérés, des éthoxylates de tristyrylphénol, du polycondensat de sulphonate de naphtalène formaldéhyde, des sels de lignosuflonate, des polycarboxylates.

7. Composition selon l'une quelconques des revendications précédentes, contenant éventuellement dudit composé insecticide ou pesticide désorbé qui est émulsionné dans ladite phase aqueuse.

8. Composition selon l'une quelconque des revendications précédentes, comprenant en outre un ou plusieurs antioxydants choisis parmi le 2,6-di-tert-butyl-4-méthylphénol (BHT), le 2,6-bis-(1,1-diméthyléthyl)-4-méthylphénol, le butylhydroxyanisole (BHA), 2,6-di-tert-but-1-hydroxy-4-méthylbenzène, le 6-éthoxy-6-éthoxy-1,2-dihydro-2,2,4-triméthylquinoléine, le 2-tert-butylhydroquinone, les tocophérols, les gallates, ainsi que leurs mélanges.

9. Composition selon l'une quelconque des revendications précédentes, comprenant en outre un agent anti-mousse.

10. Composition selon l'une quelconque des revendications précédentes, comprenant en outre, comme solvant, un solvant à base de composés aromatiques, un kérosène désaromatisé, une huile minérale, une huile végétale, un biodiesel ou un agrocarburant choisi parmi le biodiesel de colza, de tournesol, d'algues, de maïs, de coco, de palme, de coton, de préférence dans un rapport en poids, solvant/composé insecticide liquide ou cireux à la température ambiante compris entre 0,5 et 2..

11. Composition suivant l'une quelconque des revendications précédentes, comprenant de 0,25 à 400 g/l de composé pyréthroïde ou de pyrèthre.

12. Procédé de fabrication d'une suspension concentrée de composé insecticide ou pesticide, liquide ou cireux à température ambiante comprenant les étapes de mise en suspension de particules de silicate et dudit composé insecticide ou pesticide dans une phase aqueuse, **caractérisé en ce que** ledit silicate est calciné et **en ce que** le procédé comprend en outre préalablement à ladite mise en suspension, une formation d'une phase liquide homogène dudit composé insecticide de pesticide et une pulvérisation de cette phase liquide homogène sur lesdites particules de silicates calcinées.

13. Procédé selon la revendication 12, dans lequel la formation de ladite phase liquide homogène comprend une dilution dudit composé insecticide ou pesticide, liquide ou cireux à la température ambiante dans un solvant choisi dans le groupe constitué solvant à base de composés aromatiques, un kérosène désaromatisé, une huile minérale, une huile végétale, un biodiesel ou un agrocarburant choisi parmi le biodiesel de colza, de tournesol, d'algues, de maïs, de coco, de palme, de coton.

14. Procédé selon la revendication 12 ou 13 dans lequel la formation de ladite phase liquide homogène comprend en outre une addition d'un ou plusieurs additifs choisi parmi un ou plusieurs tensioactifs, un ou plusieurs antioxydants, un stabilisateur.

15. Procédé selon l'une quelconque des revendications 12 à 14, comprenant en outre, préalablement à la mise en suspension, une dispersion mécanique desdites particules de silicate calciné sur lesquelles est adsorbé ledit composé insecticide ou pesticide.

16. Procédé selon l'une quelconque des revendications 12 à 15, dans lequel ladite mise en suspension est accompagnée d'une addition d'un ou plusieurs additifs choisi parmi un ou plusieurs tensioactifs, un ou plusieurs antioxydants, un agent anti-mousse, un agent bactéricide, fongicide, un conservateur, un stabilisateur.

## Patentansprüche

1. Flüssige Pestizidzusammensetzung, umfassend eine flüssige oder wachsartige Insektizid- oder Pestizidverbindung bei Umgebungstemperatur und ein Silikat in Suspension in einer wässrigen Phase, **dadurch gekennzeichnet, dass** die genannte Insektizid- oder Pestizidverbindung auf dem genannten kalzinierten Silikat adsorbiert ist.

2. Zusammensetzung nach Anspruch 1, wobei die genannte Insektizid- oder Pestizidverbindung, flüssig oder wachsartig, eine Pyrethroidverbindung oder ein natürliches Pyrethrum ist.

3. Zusammensetzung nach Anspruch 2, wobei die genannte Pyrethroidverbindung ausgewählt ist aus der Gruppe von Permethrin, Cypermethrin, Zeta-Cypermethrin, Fenvalerat, Cyfluthrin, Cyhalothrin und Mischungen davon.

4. Zusammensetzung nach einem der Ansprüche 1 bis 3, wobei das genannte kalzinierte Silikat ein d50 in einem Bereich von 0,1 bis 50 zeigt.

5. Zusammensetzung nach einem der vorhergehenden Ansprüche, wobei das genannte kalzinierte Silikat ausgewählt ist aus der Gruppe bestehend aus kalzinierten Aluminosilikaten, kalzinierten Magnesiumsilikaten, kalzinierten Magnesiumaluminosilikaten und Mischungen davon.

6. Zusammensetzung nach einem der vorhergehenden Ansprüche, ferner umfassend ein oder mehrere Tenside ausgewählt aus der Gruppe bestehend aus ionischen Tensiden und nichtionischen Tensiden, wie Alkylphenolalkoxylate, Alkoholalkoxylate, Phosphatester, Phosphatether, Alkylpolyglucoside, Saccharoseester, Methoxypolyethylenglykole, Fettalkoholsulfate, Fettalkoholethersulfate, Tristyrylphenolethoxylate, Naphthalinsulfonat-Formaldehyd-Polykondensat, Lignosulfonate Salze, Polycarboxylate.

7. Zusammensetzung nach einem der vorhergehenden Ansprüche, gegebenenfalls umfassend die genannte desorbierte Insektizid- oder Pestizidverbindung, die in der genannten wässrigen Phase emulgiert ist.

8. Zusammensetzung nach einem der vorhergehenden Ansprüche, ferner umfassend ein oder mehrere Antioxidantien ausgewählt aus 2,6-Di-tert-butyl-4-methylphenol (BHT), 2,6-Bis(1,1-dimethylethyl)-4-methylphenol, Butylhydroxyanisol (BHA), 2,6-Di-tert-butyl-1-hydroxy-4-methylbenzene, 6-Ethoxy-6-ethoxy-1,2-dihydro-2,2,4-Trimethylchinolin, 2-tert-Butylhydrochinon, Tocopherole, Gallate und Mischungen davon.

9. Zusammensetzung nach einem der vorhergehenden Ansprüche, ferner umfassend ein Schaumverhüter.

10. Zusammensetzung nach einem der vorhergehenden Ansprüche, ferner umfassend, als Lösungsmittel, ein Lösungsmittel auf Grundlage aromatischer Verbindungen, ein entaromatisiertes Kerosin, ein Mineralöl, ein Pflanzenöl, einen Biodiesel oder einen Biokraftstoff ausgewählt aus Biodiesel von Raps, Sonnenblumen, Algen, Mais, Kokos, Palm, Baumwolle, vorzugsweise in einem Gewichtsverhältnis, Lösungsmittel/flüssige oder wachsartige Insektizidverbindung bei Umgebungstemperatur zwischen 0,5 und 2.

11. Zusammensetzung nach einem der vorhergehenden Ansprüche, umfassend 0,25 bis 400 g/l von einer Pyrethroidverbindung oder von Pyrethrum.

12. Verfahren zur Herstellung eines Suspensionskonzentrats einer Insektizid- oder Pestizidverbindung, flüssig oder wachsartig, bei Umgebungstemperatur umfassend die Schritte des Suspendierens von Silikat Partikeln und von der genannten Insektizid- oder Pestizidverbindung in einer wässrigen Phase, **dadurch gekennzeichnet, dass** das genannte Silikat kalziniert ist, und dass das Verfahren ferner unter anderem, bevor der genannten Suspendieren, eine Bildung einer homogenen flüssigen Phase von der genannten Insektizid- oder Pestizidverbindung und eine Pulverisierung dieser homogenen flüssigen Phase auf den genannten Partikeln von kalzinierten Silikaten umfasst.

13. Verfahren nach Anspruch 12, wobei die Bildung der genannten homogenen flüssigen Phase eine Verdünnung umfasst der genannten Insektizid- oder Pestizidverbindung, flüssig oder wachsartig bei Umgebungstemperatur in einem Lösungsmittel ausgewählt aus der Gruppe bestehend aus Lösungsmittel auf Grundlage aromatischer Verbindungen, einem entaromatisierten Kerosin, einem Mineralöl, einem Pflanzenöl, einem Biodiesel oder einem Biokraftstoff ausgewählt aus dem Biodiesel von Raps, Sonnenblumen, Algen, Mais, Kokos, Palm, Baumwolle.

14. Verfahren nach Anspruch 12 oder 13, wobei die Bildung der genannten homogenen flüssigen Phase ferner eine Zufügung von einem oder mehreren Additiven, ausgewählt aus einem oder mehreren Tensides, einem oder mehreren Antioxidantien, einem Stabilisator, umfasst.

15. Verfahren nach einem der Ansprüche 12 bis 14, ferner umfassend, bevor der Suspension, eine mechanische Dispersion der genannten Partikeln von kalzinierten Silikaten, worauf die genannte Insektizid- oder Pestizidverbindung adsorbiert ist.

16. Verfahren nach einem der Ansprüche 12 bis 15, wobei die genannte Suspension begleitet wird durch eine Zufügung von einem oder mehreren Additiven, ausgewählt aus einem oder mehreren Tensiden, einem oder mehreren Antioxidantien, einem Schaumverhüter, ein bakterizides Mittel, Fungizid, einem Konservierungsmittel, einem Stabilisator.

## Claims

1. A liquid pesticidal composition comprising a liquid or waxy insecticidal or pesticidal compound at ambient temperature and a silicate in suspension in an aqueous phase, **characterized in that** said insecticidal or pesticidal compound is adsorbed on said calcinated silicate.

2. Composition according to claim 1, wherein said insecticidal or pesticidal compound, liquid or waxy, is a pyrethroid compound or a natural pyrethrum.

3. Composition according to claim 2, wherein said pyrethroid compound is selected from the group of permethrin, cypermethrin, zeta-cypermethrin, fenvalerate, cyfluthrin, cyhalothrin, as well as mixtures thereof.

4. Composition according to any of claims 1 to 3, wherein said calcinated silicate presents a d50 comprised in a range going from 0.1 to 50.

5. Composition according to any of the preceding claims, wherein said calcinated silicate is selected from the group consisting of calcinated aluminosilicates, calcinated magnesium silicates, calcinated magnesium aluminosilicates and mixtures thereof.

6. Composition according to any of the preceding claims, further comprising one or more surfactants selected from the group consisting of ionic surfactants and non-ionic surfactants, such as alkylphenol alkoxylates, alcohol alkoxylates, phosphate esters, phosphate ethers, alkylpolyglucosides, sucrose esters, methoxypolyethylene glycols, fatty alcohol sulfates, fatty alcohol sulphate ethers, tristyrylphenol ethoxylates, naphthalene sulfonate formaldehyde polycondensate, lignosulfonate salts, polycarboxylates.

7. Composition according to any of the preceding claims, optionally comprising said desorbed insecticidal or pesticidal compound emulsified in said aqueous phase.

8. Composition according to any of the preceding claims, further comprising one or more antioxidants selected from 2,6-di-tert-butyl-4-methylphenol (BHT), 2,6-bis-(1,1-dimethylethyl)-4-methylphenol, butylhydroxyanisole (BHA), 2,6-di-tert-but-1-hydroxy-4-methylbenzene, 6-ethoxy-6-ethoxy-1,2-dihydro-2,2,4-trimethylquinoline, 2-tert-butyl-hydroquinone, tocopherols, gallates, as well as mixtures thereof.

9. Composition according to any of the preceding claims, further comprising an anti-foaming agent.

10. Composition according to any of the preceding claims, further comprising, as a solvent, a solvent on the basis of aromatic compounds, a dearomatised kerosene, a mineral oil, a vegetable oil, a biodiesel or biofuel selected from biodiesel of rapeseed, sunflower, algae, corn, coconut, palm, cotton, preferably in a weight ratio, solvent/liquid or waxy insecticidal compound at ambient temperature between 0.5 and 2.

11. Composition according to any of the preceding claims, comprising 0.25 to 400 g/l of pyrethroid compound or pyrethrum.

12. Method of manufacturing a suspension concentrate of an insecticidal or pesticidal compound, liquid or waxy at ambient temperature comprising the steps of suspending silicate particles and said insecticidal or pesticidal compound in an aqueous phase, **characterized in that** said silicate is calcinated and the method further comprises prior to said bringing in suspension, the formation of a homogeneous liquid phase of said insecticidal or pesticidal compound and a pulverization of said homogeneous liquid phase over said calcinated silicate particles.

13. Method according to claim 12, wherein the formation of said homogeneous liquid phase comprises a dilution of said insecticidal or pesticidal compound, liquid or waxy at ambient temperature in a solvent selected from the group consisting of solvent on the basis of aromatic compounds, a dearomatised kerosene, a mineral oil, a vegetable oil, a biodiesel or biofuel selected from biodiesel of rapeseed, sunflower, algae, corn, coconut, palm, cotton.

14. Method according to claim 12 or 13, wherein the formation of said homogeneous liquid phase further comprises an addition of one or more additives selected from one or more surfactants, one or more antioxidants, a stabilizer.

15. Method according to any of the claims 12 to 14, further comprising, prior to the bringing in suspension, a mechanical dispersion of said particles of calcinated silicate on which said insecticidal or pesticidal compound is adsorbed.

16. Method according to any of claims 12 to 15, wherein said bringing in suspension is accompanied by an addition of one or more additives selected from one or more surfactants, one or more antioxidants, an anti-foaming agent, a bactericide agent, fungicide, a preservative, a stabilizer.
